# EUROPÄISCHE PATENTSCHRIFT

(11) **EP 3 425 459 B1**
(45) Veröffentlichungstag und Bekanntmachung des Hinweises auf die Patenterteilung: **29.12.2021**
(21) Anmeldenummer: 17179497.7
(22) Anmeldetag: 04.07.2017
(51) Int. Cl.: G05B 19/042

(54) **AUTOMATISCHES KONFIGURIEREN EINES AUTOMATISIERUNGSSYSTEMS**
AUTOMATIC CONFIGURATION OF AN AUTOMATION SYSTEM
CONFIGURATION AUTOMATIQUE D'UN SYSTÈME D'AUTOMATISATION

(43) Veröffentlichungstag der Anmeldung: 09.01.2019
(73) Patentinhaber: Siemens Aktiengesellschaft, 80333 München (DE)
(72) Erfinder: Dietrich, Vincent, 81549 München (DE); Feiten, Wendelin, 85579 Neubiberg (DE); Fiegert, Michael, 81739 München (DE)

(56) Entgegenhaltungen:
- EP-A1- 2 770 382
- DE-A1-102009 043 968

## Beschreibung

Die vorliegende Erfindung betrifft Verfahren und Systeme zum automatischen Konfigurieren eines Automatisierungssystems, insbesondere zur Unterstützung und Automatisierung eines Entwurfs eines Wahrnehmungssystems eines Automatisierungssystems.

Insbesondere in der industriellen Automatisierung finden automatisch oder autonom handelnde Systeme eine zunehmende Verbreitung. Autonom handelnde Systeme können beispielsweise für Montageanwendungen in der Fertigungsautomatisierung eingesetzt werden. Die autonom handelnden Systeme treffen Entscheidungen auf Basis eines angenommenen Umgebungszustandes oder Weltzustandes. Der Umgebungszustand kann mithilfe von Sensoren, beispielsweise Farbkameras, 3D Kameras oder Kraftsensoren, verschiedenen Algorithmen, beispielsweise Objekterkennung, Filterung oder Datenfusion, aktiven Wahrnehmungsaktionen, beispielsweise einer Positionierung von Sensoren oder Objekten, und Modellinformationen, wie zum Beispiel einem Sensormodell, Unsicherheitsmodell oder physikalischen Modell, erfasst werden. Die Kombination dieser Komponenten zur Erfassung des Umgebungszustandes wird auch als Wahrnehmungssystem bezeichnet. Das Auswählen und Konfigurieren der Komponenten des Wahrnehmungssystems für eine bestimmte Anwendung ist ein aufwendiger Prozess, in welchen Informationen unterschiedlicher Fachgebiete einfließen können.

Aus Sicht der Anwendung können beispielsweise Anforderungen spezifiziert werden, wie zum Beispiel benötigte Zustandsinformationen, Genauigkeit und Geschwindigkeit.

In Bezug auf die Sensoren kann eine Auswahl derart getroffen werden, dass unter den zu erwartenden Umgebungsbedingungen für die Anwendung geeignete Daten bereitgestellt werden können. Dabei können Hilfsmittel von Sensorherstellern, beispielsweise online-Rechner zur Bestimmung geeigneter Sensoranbauteile verwendet werden, um beispielsweise geeignete Objektive für einen Kamerasensor zu ermitteln.

Aus Sicht der Automatisierungsanlage ist eine Realisierbarkeit einer mechanischen und elektrischen Integration der Sensoren in die Anlage sicherzustellen, insbesondere unter Berücksichtigung der damit verbundenen Kosten.

Weiterhin sind geeignete Datenverarbeitungsverfahren auszuwählen, zu parametrisieren und zu testen, beispielsweise Verfahren zur Objekterkennung, Filterung und Datenfusion.

Wenn die Komponenten des Wahrnehmungssystems ausgewählt und konfiguriert sind, kann das gesamte Wahrnehmungssystem im Verbund mit Aktoren mit entsprechenden Simulationswerkzeugen simuliert werden.

Werkzeuge, um die zuvor beschriebenen Informationen in Bezug auf die Anwendungsanforderungen, die Sensoren, die Automatisierungsanlage und die Datenverarbeitungsverfahren zu ermitteln, sind im allgemeinen nicht durchgängig verknüpft und erfordern daher viel manuelles Übertragen von Daten. Insbesondere eine übergreifende Konfiguration der Komponenten des gesamten Wahrnehmungssystems ist daher ein weitestgehend manueller Prozess.

Aufgabe der vorliegenden Erfindung ist es daher, die Konfiguration eines Wahrnehmungssystems zu verbessern, insbesondere ein Automatisieren zu ermöglichen.

Diese Aufgabe wird gemäß der vorliegenden Erfindung durch ein Verfahren zum Konfigurieren eines Automatisierungssystems sowie ein System zum Konfigurieren eines Automatisierungssystems gemäß der unabhängigen Ansprüche gelöst. Die abhängigen Ansprüche definieren Ausführungsformen der Erfindung.

Gemäß der vorliegenden Erfindung wird ein Verfahren zum Konfigurieren eines Automatisierungssystems bereitgestellt. Das Automatisierungssystem umfasst als Komponenten zumindest einen Sensor und eine Datenverarbeitungsvorrichtung. Das Automatisierungssystem kann auch mehrere Sensoren und Datenverarbeitungsvorrichtungen umfassen. Ferner kann das Automatisierungssystem einen oder mehrere Aktoren umfassen. Das Automatisierungssystem kann beispielsweise ein System zur Fertigung eines Werkstücks aus mehreren Werkstückelementen umfassen. Ferner kann das Automatisierungssystem ein System zum Überprüfen von Eigenschaften eines Werkstücks umfassen. Die Sensoren können beispielsweise optische Sensoren, beispielsweise Kamerasysteme, Entfernungsmesssysteme (Ultraschallsensoren, LiDAR- oder Radarsensoren), Beschleunigungssensoren, Kraftsensoren, Drucksensoren und dergleichen umfassen. Die Datenverarbeitungsvorrichtungen können beispielsweise Mikroprozessorsteuerungen, Signalprozessoren oder Bildverarbeitungsprozessoren umfassen. Die Aktoren können beispielsweise Roboterarme, bewegliche Plattformen, Förderbänder oder Bearbeitungswerkzeuge, wie zum Beispiel Schneidvorrichtungen oder Bohrer, umfassen. Bei dem Verfahren wird automatisch eine Qualitätsmetrik von zumindest dem Sensor des Automatisierungssystems in Abhängigkeit von einer Simulation des Automatisierungssystems und in Abhängigkeit von Referenzdaten bestimmt. In Abhängigkeit der Qualitätsmetrik wird eine Konfiguration der Komponente automatisch bestimmt. Dabei können insbesondere Genauigkeitsanforderungen an das Automatisierungssystem für die Qualitätsmetrik berücksichtigt werden.

Die Qualitätsmetrik kann beispielsweise eine Verarbeitungszeit von Algorithmen in der Datenverarbeitungsvorrichtung, sowie eine Positionsgenauigkeit und eine Orientierungsgenauigkeit von zu bearbeitenden Objekten, Sensoren und Aktoren umfassen. Ferner kann die Qualitätsmetrik eine Modellierungsgenauigkeit der Komponenten in einem maschinenverarbeitbaren Modell des Automatisierungssystems umfassen, beispielsweise wie genau ein Simulationsmodell von einem Sensor oder Aktor das reale Verhalten abbildet. Weiterhin kann die Qualitätsmetrik eine Kalibriergenauigkeit von Aktoren und/oder Sensoren umfassen. Alternativ oder zusätzlich kann die Qualitätsmetrik eine zeitliche Genauigkeit umfassen, welche beispielsweise zeitliche Toleranzen definiert, die im Rahmen eines Ablaufs von Bewegungen mehrerer Objekte auftreten können. Zu den Qualitätsmetriken können entsprechende Genauigkeitsanforderungen an das Automatisierungssystem vorgesehen sein.

Ferner kann die Qualitätsmetrik bei Klassifikationsalgorithmen, beispielsweise bei Bildverarbeitungsverfahren zur Objektklassifikation, statistische Gütekriterien umfassen, unter anderem zum Beispiel eine Sensitivität, eine Spezifität, und/oder eine Vertrauenswahrscheinlichkeit. Die Sensitivität (auch Richtig-positiv-Rate, Empfindlichkeit oder Trefferquote) gibt den Anteil von korrekt als positiv klassifizierten Objekten an der Gesamtheit der tatsächlich positiven Objekte an. Die Spezifität (auch Richtig-negativ-Rate oder kennzeichnende Eigenschaft) gibt den Anteil von korrekt als negativ klassifizierten Objekten an der Gesamtheit der in Wirklichkeit negativen Objekte an. Die Vertrauenswahrscheinlichkeit (auch Korrektklassifikationsrate oder Treffergenauigkeit) gibt den Anteil aller Objekte an, die korrekt klassifiziert werden.

Die Referenzdaten können beispielsweise Echtzeitdaten umfassen, welche außerhalb des Automatisierungssystems erfasst wurden und über eine Datenbank bereitgestellt werden. Die Erfassung außerhalb des Automatisierungssystems, beispielsweise unter Laborbedingungen, kann beispielsweise eine erheblich höhere Genauigkeit als die Genauigkeit des Automatisierungssystems selbst aufweisen. Die Referenzdaten können darüber hinaus vorgegebene Referenzdaten, beispielsweise berechnete Referenzdaten umfassen. Weiterhin können die Referenzdaten auch im Betrieb des Automatisierungssystems aufgezeichnete Daten umfassen.

Durch einen Vergleich der Simulationsergebnisse mit den Referenzdaten kann unter Berücksichtigung der entsprechenden Genauigkeitsanforderungen eine Zielfunktion oder Zielwerte für die jeweilige Qualitätsmetrik bereitgestellt werden, welche bei der Konfiguration der Komponente zu berücksichtigen sind. Ein Optimierungssystem kann die Konfigurationen der Komponenten anhand dieser Zielfunktion oder Zielwerte verbessern.

Gemäß einer Ausführungsform wird das Automatisierungssystem mittels eines maschinenverarbeitbaren Modells des Automatisierungssystems simuliert. Das Modell des Automatisierungssystems kann Modelle verschiedener Bereiche des Automatisierungssystems umfassen, beispielsweise ein Modell eines Datenverarbeitungsalgorithmus, welcher mittels der Datenverarbeitungsvorrichtung ausgeführt wird, sowie ein Modell des Sensors oder der mehreren Sensoren und ein Modell eines Aktors oder mehrerer Aktoren, welche das Automatisierungssystem umfasst. In dem Modell des Automatisierungssystems können die Konfigurationen der Komponenten einstellbar sein. Konfigurationen der Komponenten können beispielsweise eine Auswahl eines Typs der Komponente umfassen, beispielsweise einen Sensortyp oder einen Aktortyp. Alternativ oder zusätzlich kann die Konfiguration der Komponenten eine Auswahl eines Datenverarbeitungsalgorithmus umfassen, beispielsweise eine Auswahl eines Bildverarbeitungsalgorithmus. Bildverarbeitungsalgorithmen, aus welchen ausgewählt werden kann, können sich beispielsweise in Bezug auf ihre Genauigkeit oder der Möglichkeit einer zweidimensionalen oder dreidimensionalen Bildverarbeitung unterscheiden. Bei einem Datenverarbeitungsalgorithmus als Komponente können ferner Parameter des Datenverarbeitungsalgorithmus als Konfiguration einstellbar sein. Eine weitere Konfiguration der Komponenten kann beispielsweise eine geometrische Anordnung der Komponenten umfassen. Insbesondere bei Kamerasensoren kann eine Anordnung die Qualität der aus den Bildern des Kamerasensors bestimmten Informationen entscheidend beeinflussen. Darüber hinaus kann die Konfiguration auch eine Bewegung des Kamerasensors umfassen, wodurch beispielsweise eine dreidimensionale Auflösung von Informationen des Kamerasensors verbessert werden kann.

Schließlich kann die Konfiguration eine Eigenschaft von einem dem Kamerasensor zugeordneten Objektiv umfassen.

Bei einer weiteren Ausführungsform wird die Konfiguration der Komponenten zusätzlich in Abhängigkeit einer weiteren Konfiguration einer weiteren Komponente des Automatisierungssystems bestimmt. Insbesondere können beispielsweise Ketten von Modellen von Datenverarbeitungsalgorithmen definiert und konfiguriert werden. Datenverarbeitungsalgorithmen können zusätzlich mit Modellen von Aktoren und Sensoren in einer Kette definiert und konfiguriert werden.

Bei noch einer weiteren Ausführungsform ist in dem Modell des Automatisierungssystems die Konfiguration von mindestens einer Komponente der Komponenten einstellbar. Insbesondere sind zumindest wesentliche Konfigurationen der Komponenten in dem Modell des Automatisierungssystems einstellbar. Dadurch kann das Modell des Automatisierungssystems iterativ optimiert werden. Insbesondere bei Ketten von Modellen von Datenverarbeitungsalgorithmen und/oder Modellen von Sensoren und Aktoren können somit Rückwirkungen der Modelle aufeinander bei der Optimierung berücksichtigt werden.

Gemäß der vorliegenden Erfindung wird weiterhin ein System zum Konfigurieren eines Automatisierungssystems bereitgestellt. Das Automatisierungssystem umfasst als Komponenten zumindest einen Sensor und eine Datenverarbeitungsvorrichtung. Das System kann darüber hinaus auch einen oder mehrere Aktoren umfassen, welche in Abhängigkeit von Informationen von dem Sensor und einem auf der Datenverarbeitungsvorrichtung ausgeführten Datenverarbeitungsalgorithmus angesteuert werden. Das System umfasst eine Verarbeitungsvorrichtung, welche ausgestaltet ist, eine Qualitätsmetrik von zumindest dem Sensor des Automatisierungssystems in Abhängigkeit von einer Simulation des Automatisierungssystems und von Referenzdaten zu bestimmen. Ferner ist die Verarbeitungsvorrichtung in der Lage, eine Konfiguration der Komponenten in Abhängigkeit der Qualitätsmetrik zu bestimmen. Das System ist daher zur Durchführung des zuvor beschriebenen Verfahrens und seiner Ausführungsformen geeignet und umfasst daher auch die im Zusammenhang mit dem Verfahren zuvor beschriebenen Vorteile.

Weiterhin beschreibt die vorliegende Erfindung ein Computerprogrammprodukt, insbesondere ein Computerprogramm oder eine Software, welches Programmmittel umfasst und direkt in einer Speichereinheit einer programmierbaren Verarbeitungsvorrichtung ladbar ist, um alle Schritte des zuvor beschriebenen Verfahrens oder einer seiner Ausführungsformen auszuführen, wenn die Programmmittel in der Verarbeitungsvorrichtung ausgeführt werden. Dabei benötigt das Computerprogrammprodukt eventuell Programmmittel, zum Beispiel Bibliotheken und Hilfsfunktionen, um die entsprechenden Ausführungsformen des Verfahrens zu realisieren. Mit anderen Worten soll mit dem auf das Computerprogrammprodukt gerichteten Anspruch insbesondere ein Computerprogramm oder eine Software unter Schutz gestellt werden, mit welcher eine der oben beschriebenen Ausführungsformen des erfindungsgemäßen Verfahrens ausgeführt werden kann bzw. welche diese Ausführungsform ausführt. Dabei kann es sich bei der Software um einen Quellcode (zum Beispiel C++), der noch kompiliert (übersetzt) und gebunden oder der nur interpretiert werden muss, oder um einen ausführbaren Softwarecode handeln, der zur Ausführung nur noch in die entsprechende Recheneinheit bzw. Verarbeitungsvorrichtung zu laden ist.

Schließlich offenbart die vorliegende Erfindung einen elektronisch lesbaren Datenträger, zum Beispiel eine DVD, ein Magnetband, eine Festplatte oder einen USB-Stick, auf welchem elektronisch lesbare Steuerinformationen, insbesondere Software (vergleiche oben), gespeichert ist. Darüber hinaus ist es möglich, die Software bzw. die Steuerinformationen über ein Datenübertragungsnetz herunterzuladen. Wenn diese Steuerinformationen (Software) von dem Datenträger gelesen und in einer Verarbeitungsvorrichtung gespeichert werden, können alle erfindungsgemäßen Ausführungsformen des vorab beschriebenen Verfahrens durchgeführt werden.

Die vorliegende Erfindung wird nachfolgend unter Bezugnahme auf die beigefügten Figuren näher erläutert werden.
Figur 1 zeigt schematisch ein Automatisierungssystem und ein System zum Konfigurieren des Automatisierungssystems gemäß einer Ausführungsform der vorliegenden Erfindung.
Figur 2 zeigt schematisch Details des Systems zum Konfigurieren des Automatisierungssystems gemäß einer Ausführungsform der vorliegenden Erfindung.
Figur 3 zeigt schematisch Verfahrensschritte zum Konfigurieren eines Automatisierungssystems gemäß einer Ausführungsform der vorliegenden Erfindung.

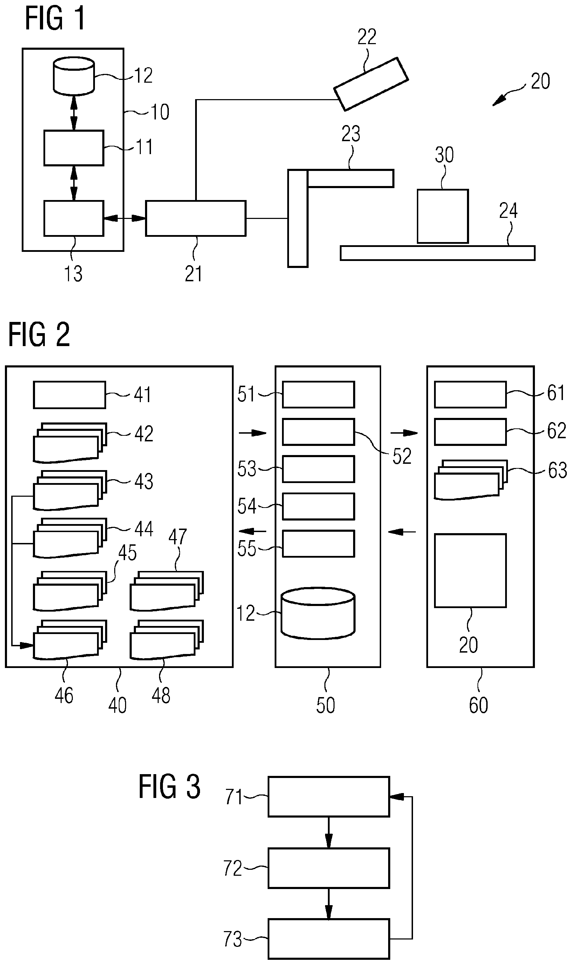

Figur 1 zeigt schematisch ein Automatisierungssystem 20 und ein System 10, mit welchem das Automatisierungssystem 20 automatisch konfiguriert wird.

Das Automatisierungssystem 20 umfasst eine Datenverarbeitungsvorrichtung 21, einen Sensor 22 und einen Aktor 23. Die Datenverarbeitungsvorrichtung 21 kann beispielsweise eine Mikroprozessorsteuerung umfassen. Der Sensor 22 kann beispielsweise eine 2D oder 3D Kamera oder eine Entfernungsmeßvorrichtung umfassen, welche beispielsweise Entfernungen auf Ultraschall-, Laser- oder Radarbasis misst. Der Aktor 23 kann beispielsweise einen oder mehrere Roboterarme umfassen. Das Automatisierungssystem 20 kann weitere Sensoren umfassen, beispielsweise Druck- oder Kraftsensoren, z.B. an dem Aktor 23. Das Automatisierungssystem 20 umfasst ferner eine Arbeitsplattform 24, auf welcher ein oder mehrere zu bearbeitende Objekte 30 angeordnet werden können. Die Arbeitsplattform 24 kann weitere Sensoren, beispielsweise Druck- oder Kraftsensoren umfassen und kann als weiterer Aktor eine verstellbare Arbeitsplattform sein. Der Sensor 22 kann örtlich verstellbar an dem Aktor 23 oder einem weiteren Aktor angeordnet sein, um einen Erfassungsbereich des Sensors 22 zu verändern. Die Steuerung der Aktoren 23 erfolgt über die Datenverarbeitungsvorrichtung 21, welche auch Informationen des Sensors 22 oder der mehreren Sensoren empfängt und verarbeitet.

In der Datenverarbeitungsvorrichtung 21 können Algorithmen zur Objekterkennung, Filterung und Datenfusion verwendet werden, um mithilfe von Informationen der Sensoren 22 und Modellinformationen, beispielsweise einem Sensormodell, einem Unsicherheitsmodell und einem physikalischen Modell des Automatisierungssystems 20, einen Zustand der Umgebung im Bereich des Objekts 30 zu bestimmen, einen sogenannten Umgebungszustand oder Weltzustand. Die Bearbeitungsvorgänge in der Datenverarbeitungsvorrichtung 21 in Verbindung mit den Sensoren 22, welche dazu dienen, den Weltzustand zu erfassen, werden auch als Wahrnehmungssystem bezeichnet. Auf der Grundlage dieses Weltzustandes kann eine mit dem Automatisierungssystem 20 gewünschte Anwendung durchgeführt werden. Die Anwendung kann beispielsweise eine Montageanwendung in der Fertigungsautomatisierung umfassen, bei welcher das Objekt 30 aus mehreren Elementen zusammengesetzt wird. Eine weitere Anwendung kann beispielsweise eine Prüfanwendung umfassen, bei welcher Prüfungen an dem Objekt 30 durchgeführt werden, beispielsweise kann das Objekt 30 vermessen werden oder auf Vollständigkeit geprüft werden.

Ein Aufsetzen und Parametrieren dieses für eine Anwendung geeigneten Wahrnehmungssystems kann beispielsweise folgende Vorgänge umfassen. Anforderungen der Anwendung können spezifiziert werden, beispielsweise benötigte Zustandsinformationen, eine Genauigkeit und Geschwindigkeit von Anordnungen und Bewegungen des Objekts 30 oder Elementen davon. Eine Auswahl der Sensoren 22 kann derart getroffen werden, dass unter den zu erwartenden Umgebungsbedingungen für die Anwendung geeignete Daten geliefert werden. Dabei kann eine mechanische und elektrische Integration der Sensoren in das Automatisierungssystem 20 eine Machbarkeit und Kosten berücksichtigen. Geeignete Datenverarbeitungsmethoden, beispielsweise Verarbeitungsalgorithmen, können ausgewählt, evaluiert, parametrisiert und getestet werden, beispielsweise zur Objekterkennung, Filterung und Datenfusion.

Diese Vorgänge können beispielsweise von dem System 10 automatisch durchgeführt werden, welches eine Konfiguration des Automatisierungssystems 20 ermöglicht, wie es nachfolgend unter Bezugnahme auf die Figur 2 beschrieben werden wird.

Das System 10 umfasst dazu eine Verarbeitungsvorrichtung 11, einen Datenspeicher 12 und eine Schnittstelle 13. Die Verarbeitungsvorrichtung 11 kann beispielsweise ein Computersystem umfassen. Der Datenspeicher 12 kann beispielsweise eine Massenspeichervorrichtung umfassen, wie sie üblicherweise in Verbindung mit einem Computersystem verwendet wird. Die Speicherung der Informationen in dem Datenspeicher 12 kann beispielsweise in Form einer Datenbank erfolgen. Die Datenbank kann als ein lokal realisierter Datenspeicher oder als eine Cloud-Lösung realisiert werden. In dem Datenspeicher 12 kann ferner ein Programm gespeichert sein, welches in die Verarbeitungsvorrichtung 11 geladen werden kann, um die nachfolgend beschriebenen Vorgänge mit der Verarbeitungsvorrichtung 11 auszuführen. Die Schnittstelle 13 ermöglicht eine Kopplung mit dem Automatisierungssystem 20. Über die Schnittstelle 13 können Konfigurationsdaten in das Automatisierungssystem 20 eingegeben werden und Informationen von dem Automatisierungssystem 20 während eines Betriebs des Automatisierungssystems 20 abgerufen werden, beispielsweise Logging-Daten, welche beispielsweise Sensordaten umfassen.

Figur 2 zeigt schematisch die Vorgänge und Informationen, welche von der Verarbeitungsvorrichtung 11 in dem System 10 bearbeitet werden. Aus Gründen der Übersichtlichkeit sind die Vorgänge und Informationen in drei Bereiche 40, 50 und 60 gegliedert.

Der Bereich 40 betrifft die Modellierung. In dem System 10 wird ein Modellierungstool 41 bereitgestellt, mit welchem Experten verschiedene Bereiche der Anwendung in einer maschinenverarbeitbaren Form beschreiben. So kann beispielsweise ein Experte für die zu realisierende Anwendung insgesamt eine Anwendungsbeschreibung 42 sowie eine Umgebungsbeschreibung 43 und eine Algorithmusbeschreibung 45 mit einer entsprechenden Beschreibungssprache bereitstellen, welche beispielsweise offen für neue vom Benutzer definierte spezielle Beschreibungsmethoden sein kann. Ein Experte für Sensoren kann für eine Vielzahl prinzipiell zur Verfügung stehender Sensoren entsprechende Sensorbeschreibungen 44 in maschinenverarbeitbarer Form bereitstellen. Ebenso kann ein Experte für Simulationen eine Simulatorbeschreibung 46 für das Automatisierungssystem 20 bereitstellen. Ferner können verschiedene Algorithmusimplementierungen 47 (beispielsweise verschiedene Implementierungen zur Objekterkennung oder Positionserkennung von Objekten) sowie verschiedene Simulatorimplementierungen 48 in maschinenverarbeitbarer Form bereitgestellt werden.

Der Bereich 50 betrifft die eigentliche Analyse und Planung. In dem Analyse- und Planungsbereich 50 wird die Maschinenverarbeitbarkeit der modellierten Komponenten genutzt, um ausführbare Wahrnehmungspläne zu generieren, welche insbesondere auch Nebenbedingungen erfüllen, welche sich beispielsweise aus der Anwendungsbeschreibung 42 oder der Umgebungsbeschreibung 43 ergeben. Dazu umfasst der Analyse- und Planungsbereich 50 mehrere Funktionen 51-55, welche von dem System 10 automatisch ausgeführt werden können.

Eine Planungsfunktion 52 plant, welche Konfigurationen von Sensoren, Datenverarbeitungsalgorithmen und Wahrnehmungsaktionen möglich sind, um die Anwendungsanforderungen zu erfüllen. Wahrnehmungsaktionen können beispielsweise eine aktive Positionierung einer beweglichen Kamera umfassen. Die Datenverarbeitungsalgorithmen umfassen beispielsweise Algorithmen, um Rohinformationen von den Sensoren auszuwerten.

Eine Schlussfolgerungsfunktion 53 (ein sogenannter Reasoner) kann Informationen herleiten, welche sich aus der Kombination anderer Informationen und der Modellierung (aus dem Bereich 40) ergeben und beispielsweise im Zuge der Planung benötigt werden.

Eine Simulatorfunktion 55 nutzt modellierte Simulationsmodelle und Simulationsverfahren, um eine Machbarkeit und Qualitätsmetriken von Wahrnehmungsprozessen zu berechnen. Darüber hinaus können die Simulationsmodelle vom Simulator auch zur Generierung von Daten für lernbasierte Datenverarbeitungsverfahren verwendet werden. Die Simulatorfunktion 55 kann von der Planungsfunktion 52 als notwendiger Prozessschritt erkannt werden und bei Bedarf durch die Planungsfunktion 52 ausgelöst werden.

Eine Analysefunktion 51 kann Qualitätsmetriken von Komponenten des Wahrnehmungssystems mithilfe von Referenzinformationen bestimmen. Die Komponenten können die Sensoren 22, Algorithmen der Datenverarbeitungsvorrichtung 21 sowie die Aktoren 23 umfassen. Die Qualitätsmetriken können beispielsweise eine Laufzeit von Algorithmen, welche von der Datenverarbeitungsvorrichtung 21 ausgeführt werden, eine Qualität einer Objektposenschätzung auf der Grundlage von Sensorinformationen und/oder eine Genauigkeit eines Simulationsmodells von beispielsweise Teilen oder des gesamten Automatisierungssystems 20 in Bezug auf das reale Verhalten umfassen. Der Begriff Objektposenschätzung betrifft die Schätzung der Position sowie der Orientierung eines Objekts, beispielsweise des Objekts 30 in Bezug auf ein Referenzbezugssystem des Automatisierungssystems 20. In dem Wahrnehmungssystem können sich die Qualitätsmetriken mehrerer Komponenten gegenseitig beeinflussen, insbesondere wenn die Komponenten in einer sogenannten Wahrnehmungskette verwendet werden. Wenn beispielsweise ein Sensor zur Objektposenbestimmung aktiv positioniert werden kann (zum Beispiel eine beweglich und steuerbar angebrachte Kamera) können in eine Posengenauigkeit als Qualitätsmetrik verschiedene Genauigkeiten oder Unsicherheiten eingehen, beispielsweise eine Positioniergenauigkeit des Sensors, eine Auflösung und optische Genauigkeit des Sensors, sowie eine Genauigkeit der Posenschätzung eines Verarbeitungsalgorithmus, welcher in der Datenverarbeitungsvorrichtung 21 ausgeführt wird. Diese Qualitätsmetrik kann von weiteren Randbedingungen abhängen, beispielsweise von vorgegebenen zeitlichen Rahmenbedingungen, welche aus Sicht der Anwendung einzuhalten sind. So kann beispielsweise bei einer geforderten kurzen Verarbeitungszeit ein Verarbeitungsalgorithmus zur Posenschätzung ein ungenaueres Ergebnis liefern als bei einer länger zur Verfügung stehenden Verarbeitungszeit. Gleiches gilt beispielsweise für die Genauigkeit der Positionierung des Sensors sowie der Erfassungsgenauigkeit des Sensors selbst.

Die Referenzinformationen können beispielsweise Referenzdaten sein, welche aus Randbedingungen für die Anwendung vorgegeben sind. Derartige Referenzdaten werden auch als Ground-Truth-Daten bezeichnet. Alternativ oder zusätzlich können die Referenzinformationen aus real erfassten Echtzeitdaten bestimmt werden, welche außerhalb des Automatisierungssystems erfasst werden, beispielsweise in einem Laborbetrieb des Automatisierungssystems mit Sensoren höherer Genauigkeit. Ferner können die Referenzinformationen im Betrieb des Automatisierungssystems aufgezeichnete Daten umfassen. Die Referenzinformationen können in dem Datenspeicher 12 in beispielsweise einer lokalen oder globalen Datenbank gespeichert werden.

Eine Optimierungsfunktion 54 kann dazu verwendet werden, die Vielzahl der Parameter der Komponenten in dem Wahrnehmungssystem, insbesondere in Wahrnehmungsketten, anzupassen, um eine Leistungsfähigkeit und Qualität des Wahrnehmungssystems je nach Anwendung zu verbessern. Startwerte für die Parameteroptimierung können dabei aus den Referenzinformationen oder aufgezeichneten Daten von Wahrnehmungssystemen anderer Anwendungen abgeleitet werden.

Der Bereich 60 betrifft die Ausführung, d.h., die Konfiguration des Automatisierungssystems 20. Im Rahmen der Ausführung 60 wird das Wahrnehmungssystem des Automatisierungssystems 20 gemäß einem Wahrnehmungsplan konfiguriert und notwendige Prozessschritte zum Erreichen eines Wahrnehmungsziels ausgeführt. Mithilfe einer Ausführungsfunktion 61, einer sogenannten Ausführungs-Engine, wird der Wahrnehmungsplan in ausführbaren Aktionen umgesetzt. Eine Aufzeichnungsfunktion 62, ein sogenanntes Logging-System, überführt Daten bezüglich der Wahrnehmung in die Datenbank 12. Mithilfe einer dynamischen Anwendungsbeschreibung 63 können Anforderungen für neue, im Betrieb auftretende Wahrnehmungsaufgaben definiert und für diese geeignete Wahrnehmungspläne generiert werden. Über die Ausführungsfunktion 61 und die Schnittstelle 13 werden insbesondere die Parameter der Komponenten in dem Wahrnehmungssystem des Automatisierungssystems 20 konfiguriert, wie sie von der Analysefunktion 51 und der Optimierungsfunktion 54 bereitgestellt werden.

Figur 3 zeigt zusammenfassend Verfahrensschritte zum Konfigurieren des Automatisierungssystems 20 mithilfe des Systems 10. Das Verfahren kann iterativ durchgeführt werden, wie es nachfolgend gezeigt werden wird.

In einem Schritt 71 wird automatisch eine Qualitätsmetrik von mindestens einer der Komponenten des Automatisierungssystems in Abhängigkeit von einer Simulation des Automatisierungssystems 20 und von Referenzinformationen bestimmt. Die Qualitätsmetriken können für Sensoren 22 und Algorithmen sowie eine gesteuerte Anordnung der Sensoren 22 des Wahrnehmungssystems des Automatisierungssystems 20 bestimmt werden. Als Qualitätsmetriken können beispielsweise eine Laufzeit eines Algorithmus (beispielsweise Bildverarbeitung, Aktor Steuerung, Sensorpositionierung, Sensorauswertung), eine Positioniergenauigkeit, eine Genauigkeit einer Objektposenbestimmung oder eine Genauigkeit eines Simulationsmodells bestimmt werden.

Die Qualitätsmetrik kann bei Aktoren insbesondere beispielsweise eine Positioniergenauigkeit sowie eine Kalibriergenauigkeit umfassen.

Bei Sensoren kann die Qualitätsmetrik eine Genauigkeit einer extrinsischen Kalibrierung umfassen. Die extrinsische Kalibrierung betrifft beispielsweise eine Genauigkeit der Position des Sensors relativ zu einem Aktor. Bei Sensoren kann die Qualitätsmetrik ferner verschiedene mögliche Unsicherheitsmodelle umfassen, beispielsweise bei Farbkameras ein Rauschen oder bei 3D Kameras ein longitudinales Rauschen bzw. laterales Rauschen in Abhängigkeit von zum Beispiel einem Abstand zum Meßobjekt.

Bei Datenverarbeitungsalgorithmen kann die Qualitätsmetrik eine Verarbeitungszeit sowie eine Genauigkeit einer Posenschätzung in Abhängigkeit von der Qualität der Eingangsdaten und des Objekts umfassen.

Bei Simulationsmodellen kann die Qualitätsmetrik beschreiben, wie genau das Simulationsmodell von einem Sensor oder Aktor das reale Verhalten abbildet.

In einem Schritt 72 werden Konfigurationen der Komponenten in Abhängigkeit der automatisch bestimmten Qualitätsmetriken bestimmt. Da sich die Qualitätsmetriken verschiedener Komponenten insbesondere in Wahrnehmungsketten gegenseitig beeinflussen können, kann die Konfiguration einer Komponente des Wahrnehmungssystems zusätzlich in Abhängigkeit von Konfigurationen der übrigen Komponenten des Wahrnehmungssystems bestimmt werden.

In einem Schritt 73 wird in dem Modell des Automatisierungssystems die Konfiguration der Komponenten eingestellt und mit dem so optimierten Modell kann das Verfahren beginnend mit dem Schritt 71 wiederholt werden. Parallel dazu kann die Konfiguration der Komponenten über die Schnittstelle 13 an das Automatisierungssystem 20 ausgegeben werden, um zusätzliche Referenzdaten mithilfe des Automatisierungssystems 20 zu erzeugen und bei der weiteren iterativen Konfiguration des Automatisierungssystems zu berücksichtigen.

Durch die automatisierte Konfiguration des Automatisierungssystems 20 können Engineering Kosten für autonome Systeme und Automatisierungssysteme reduziert werden. Nachdem die Anwendung mithilfe des Modellierungstools 41 beschrieben wurde, kann das System 10 ein durchgeplantes und auf Basis von Simulationen und Referenzinformationen validiertes Wahrnehmungssystem vorschlagen. Sofern die Hardware des Automatisierungssystems 20 bereits vorhanden ist, kann das vorgeschlagene Wahrnehmungssystem direkt mithilfe der Ausführungsfunktion 61 zu dem Automatisierungssystem 20 übertragen werden.

Ferner unterstützt das System 10 eine Verbesserung und Rekonfiguration des Automatisierungssystems 20. Das Rückführen und Sammeln von Daten ermöglicht kontinuierliches Neuplanen und verbessern der Wahrnehmung. Auf neue Anwendungsanforderung kann durch dynamische Anwendungsbeschreibungen reagiert werden und neue Wahrnehmungsansätze können automatisch geplant werden.

## Patentansprüche

1. Verfahren zum Konfigurieren eines Automatisierungssystems, wobei das Automatisierungssystem (20) als Komponenten zumindest einen Sensor (22) und eine Datenverarbeitungsvorrichtung (21) umfasst, wobei das Verfahren umfasst:
- automatisches Bestimmen einer Qualitätsmetrik von zumindest dem Sensor (22) des Automatisierungssystems (20) in Abhängigkeit von einer Simulation des Automatisierungssystems (20) und von Referenzinformationen, und
- Bestimmen einer Konfiguration der Komponenten (21, 22) in Abhängigkeit der Qualitätsmetrik.

2. Verfahren nach Anspruch 1, ferner umfassend:
- Bestimmen der Konfiguration der Komponenten (21, 22) in Abhängigkeit einer Genauigkeitsanforderung an das Automatisierungssystem (20).

3. Verfahren nach Anspruch 1 oder Anspruch 2, wobei das Automatisierungssystem (20) mittels eines maschinenverarbeitbaren Modells (46) des Automatisierungssystems (20) simuliert wird.

4. Verfahren nach Anspruch 3, wobei das Modell (46) des Automatisierungssystems (20) umfasst:
- ein Modell (45) eines Datenverarbeitungsalgorithmus, welcher mittels der Datenverarbeitungsvorrichtung (21) ausgeführt wird, und/oder
- ein Modell (44) des Sensors (22), und/oder
- ein Modell eines Aktors (23), welchen das Automatisierungssystem (20) als eine weitere Komponente der Komponenten umfasst.

5. Verfahren nach Anspruch 3 oder Anspruch 4, wobei in dem Modell (46) des Automatisierungssystems (20) die Konfiguration von mindestens einer Komponente der Komponenten (21, 22) einstellbar ist.

6. Verfahren nach einem der vorhergehenden Ansprüche, wobei die Referenzinformationen umfassen:
- außerhalb des Automatisierungssystems (20) erfasste reale Echtzeitdaten,
- vorgegebenen Referenzdaten, und/oder
- im Betrieb des Automatisierungssystems (20) aufgezeichneten Daten.

7. Verfahren nach einem der vorhergehenden Ansprüche, wobei die Qualitätsmetrik zumindest eine Metrik aus einer Gruppe umfasst, welche umfasst:
- eine Verarbeitungszeit,
- eine Positionsgenauigkeit,
- eine Orientierungsgenauigkeit,
- eine Modellierungsgenauigkeit der Komponenten (21, 22) in einem maschinenverarbeitbaren Modell (46) des Automatisierungssystems (20),
- eine Kalibriergenauigkeit,
- eine zeitliche Genauigkeit, und
- statistische Gütekriterien einer Klassifikation.

8. Verfahren nach einem der vorhergehenden Ansprüche, wobei die Konfiguration der Komponenten (21, 22) umfasst:
- eine Auswahl eines Typs der Komponente,
- eine Auswahl eines Datenverarbeitungsalgorithmus, und/oder
- eine geometrische Anordnung der Komponenten.

9. Verfahren nach einem der vorhergehenden Ansprüche, ferner umfassend
- Bestimmen der Konfiguration der Komponenten (21, 22) zusätzlich in Abhängigkeit einer weiteren Konfiguration einer weiteren Komponente des Automatisierungssystems (20).

10. System zum Konfigurieren eines Automatisierungssystems, wobei das Automatisierungssystem (20) als Komponenten zumindest einen Sensor (22) und eine Datenverarbeitungsvorrichtung (21) umfasst, wobei das System (10) eine Verarbeitungsvorrichtung (11) umfasst, welche ausgestaltet ist,
- eine Qualitätsmetrik von zumindest dem Sensor (22) des Automatisierungssystems (20) in Abhängigkeit von einer Simulation des Automatisierungssystems (20) und von Referenzinformationen zu bestimmen, und
- eine Konfiguration der Komponenten (21, 22) in Abhängigkeit der Qualitätsmetrik zu bestimmen.

11. System nach Anspruch 10, **dadurch gekennzeichnet, dass** das System (10) zur Durchführung des Verfahrens nach einem der Ansprüche 1-9 ausgestaltet ist.

12. Computerprogrammprodukt, welches Programmmittel umfasst und direkt in eine Speichereinheit einer programmierbaren Verarbeitungsvorrichtung (11) ladbar ist, um alle Schritte des Verfahrens nach einem der Ansprüche 1-9 auszuführen, wenn die Programmmittel in der Verarbeitungsvorrichtung (11) ausgeführt werden.

13. Elektronisch lesbarer Datenträger mit darauf gespeicherten elektronisch lesbaren Steuerinformationen, welche derart ausgestaltet sind, dass sie bei Verwendung des Datenträgers (13) in einer Verarbeitungsvorrichtung (11) das Verfahren nach einem der Ansprüche 1-9 durchführen.

## Claims

1. Method for configuring an automation system, wherein the automation system (20) comprises as components at least one sensor (22) and a data processing apparatus (21), wherein the method comprises:
- automatically determining a quality metric of at least the sensor (22) of the automation system (20) on the basis of a simulation of the automation system (20) and reference information, and
- determining a configuration of the components (21, 22) on the basis of the quality metric.

2. Method according to Claim 1, further comprising:
- determining the configuration of the components (21, 22) on the basis of an accuracy requirement with respect to the automation system (20).

3. Method according to Claim 1 or Claim 2, wherein the automation system (20) is simulated by means of a machine-processable model (46) of the automation system (20).

4. Method according to Claim 3, wherein the model (46) of the automation system (20) comprises:
- a model (45) of a data processing algorithm which is executed by means of the data processing apparatus (21), and/or
- a model (44) of the sensor (22), and/or
- a model of an actuator (23) which the automation system (20) comprises as a further component among the components.

5. Method according to Claim 3 or Claim 4, wherein in the model (46) of the automation system (20), the configuration of at least one component among the components (21, 22) is adjustable.

6. Method according to one of the preceding claims, wherein the reference information comprises:
- actual real-time data captured outside of the automation system (20),
- predetermined reference data, and/or
- data recorded during operation of the automation system (20) .

7. Method according to one of the preceding claims, wherein the quality metric comprises at least one metric from a group comprising:
- a processing time,
- a position accuracy,
- an orientation accuracy,
- a modelling accuracy of the components (21, 22) in a machine-processable model (46) of the automation system (20),
- a calibration accuracy,
- a temporal accuracy, and
- statistical quality criteria of a classification.

8. Method according to one of the preceding claims, wherein the configuration of the components (21, 22) comprises:
- a selection of a type of component,
- a selection of a data processing algorithm, and/or
- a geometric arrangement of the components.

9. Method according to one of the preceding claims, further comprising:
- determining the configuration of the components (21, 22) additionally on the basis of a further configuration of a further component of the automation system (20).

10. System for configuring an automation system, wherein the automation system (20) comprises as components at least one sensor (22) and a data processing apparatus (21), wherein the system (10) comprises a processing apparatus (11) which is designed
- to determine a quality metric of at least the sensor (22) of the automation system (20) on the basis of a simulation of the automation system (20) and reference information, and
- to determine a configuration of the components (21, 22) on the basis of the quality metric.

11. System according to Claim 10, **characterized in that** the system (10) is designed to perform the method according to one of Claims 1-9.

12. Computer program product, which comprises program means and can be loaded directly into a memory unit of a programmable processing apparatus (11) in order to carry out all the steps of the method according to one of Claims 1-9 when the program means are executed in the processing apparatus (11).

13. Electronically readable data storage medium with electronically readable control information stored thereon, said control information being designed so as to perform the method according to one of Claims 1-9 when the data storage medium (13) is used in a processing apparatus (11).

## Revendications

1. Procédé permettant de configurer un système d'automatisation, dans lequel le système d'automatisation (20) comprend comme composants au moins un capteur (22) et un dispositif de traitement de données (21), dans lequel le procédé comprend les étapes consistant à :
- déterminer automatiquement une métrique de qualité d'au moins le capteur (22) du système d'automatisation (20) en fonction d'une simulation du système d'automatisation (20) et d'informations de référence, et
- déterminer une configuration des composants (21, 22) en fonction de la métrique de qualité.

2. Procédé selon la revendication 1, comprenant en outre l'étape consistant à :
- déterminer la configuration des composants (21, 22) en fonction d'une exigence de précision pour le système d'automatisation (20).

3. Procédé selon la revendication 1 ou la revendication 2, dans lequel le système d'automatisation (20) est simulé au moyen d'un modèle (46) du système d'automatisation (20) pouvant être traité par machine.

4. Procédé selon la revendication 3, dans lequel le modèle (46) du système d'automatisation (20) comprend :
- un modèle (45) d'un algorithme de traitement de données qui est exécuté au moyen du dispositif de traitement de données (21), et/ou
- un modèle (44) du capteur (22), et/ou
- un modèle d'un actionneur (23) que le système d'automatisation (20) comprend en tant qu'autre composant des composants.

5. Procédé selon la revendication 3 ou la revendication 4, dans lequel, dans le modèle (46) du système d'automatisation (20), la configuration d'au moins un composant des composants (21, 22) est réglable.

6. Procédé selon l'une quelconque des revendications précédentes, dans lequel les informations de référence comprennent :
- des données en temps réel acquises en dehors du système d'automatisation (20),
- des données de référence prédéfinies, et/ou
- des données enregistrées pendant le fonctionnement du système d'automatisation (20).

7. Procédé selon l'une quelconque des revendications précédentes, dans lequel la métrique de qualité comprend au moins une métrique d'un groupe comprenant :
- un temps de traitement,
- une précision de position,
- une précision d'orientation,
- une précision de modélisation des composants (21, 22) dans un modèle pouvant être traité par machine (46) du système d'automatisation (20),
- une précision d'étalonnage,
- une précision dans le temps, et
- des critères de qualité statistiques d'une classification.

8. Procédé selon l'une quelconque des revendications précédentes, dans lequel la configuration des composants (21, 22) comprend :
- une sélection d'un type de composant,
- une sélection d'un algorithme de traitement de données, et/ou
- un agencement géométrique des composants.

9. Procédé selon l'une quelconque des revendications précédentes, comprenant en outre l'étape consistant à :
- déterminer la configuration des composants (21, 22) en outre en fonction d'une configuration supplémentaire d'un composant supplémentaire du système d'automatisation (20).

10. Système de configuration d'un système d'automatisation, dans lequel le système d'automatisation (20) comprend comme composants au moins un capteur (22) et un dispositif de traitement de données (21), dans lequel le système (10) comprend un dispositif de traitement (11) qui est configuré afin de :
- déterminer une métrique de qualité d'au moins le capteur (22) du système d'automatisation (20) en fonction d'une simulation du système d'automatisation (20) et d'informations de référence,
- déterminer une configuration des composants (21, 22) en fonction de la métrique de qualité.

11. Système selon la revendication 10, **caractérisé en ce que** le système (10) est configuré afin d'exécuter le procédé selon l'une quelconque des revendications 1 à 9.

12. Produit programme informatique comprenant des moyens formant programme pouvant être chargés directement dans une unité de mémoire d'un dispositif de traitement programmable (11) afin d'exécuter toutes les étapes du procédé selon l'une quelconque des revendications 1 à 9 lorsque les moyens formant programme sont exécutés dans le dispositif de traitement (11).

13. Support de données lisible électroniquement avec des informations de commande lisibles électroniquement mémorisées sur celui-ci, qui sont conçues de manière, lorsque le support de données (13) est utilisé dans un dispositif de traitement (11), à mettre en œuvre le procédé selon l'une quelconque des revendications 1 à 9.
